# EUROPEAN PATENT APPLICATION

(11) **EP 2 778 498 A1**
(43) Date of publication of application: **17.09.2014**
(21) Application number: 14158589.3
(22) Date of filing: 10.03.2014
(51) Int. Cl.: F16N 7/22, F16C 33/66

(54) **Lubrication Ring**

(30) Priority: 12.03.2013 US 201313795607
(71) Applicant: General Electric Company, Schenectady, New York 12345 (US)
(72) Inventor: Garlapati, Praveen Kumar, 500036 Hyderabad, Andhra Pradesh (IN); Nair, Sasidharan, 500081 Hyderabad, Andhra Pradesh (IN); Poddaturi, Rajesh, 500081 Hyderabad, Andhra Pradesh (IN)
(74) Representative: Illingworth-Law, William Illingworth

(57) **Abstract**

A shaft lubrication apparatus 10 is provided and includes a rotatable shaft 11, a lubrication sump 12 and a lubrication ring 13. The lubrication ring 13 is rotatable with the rotatable shaft 11 with respect to the lubrication sump 12 whereby lubrication is transported from the lubrication sump 12 to the rotatable shaft 11.

## Description

### BACKGROUND OF THE INVENTION

The subject matter disclosed herein relates to a lubrication ring and, more particularly, to a lubrication ring for use with a shaft lubrication apparatus.

A lubricating apparatus typically includes a rotatable shaft, a lubrication sump and a lubrication ring. The lubrication ring is generally disposed about and hangs freely from the rotatable shaft whereby a portion of the lubrication ring contacts a portion of the rotatable shaft relative to a gravitation direction and another portion of the lubrication ring sits in the lubrication sump. The lubrication ring thus rotates along with the rotation of the rotatable shaft such that the lubrication ring rotates through the lubrication sump. In so doing, the lubrication ring carries lubricant from the lubrication sump to the rotatable shaft where it is deposited.

Often, the lubricating apparatus provides insufficient amounts of lubrication to the rotatable shaft due to the design of the lubrication ring. This can lead to dry runs of the rotatable shaft and potential damage. As a result, it is frequently necessary to provide more than one lubrication ring in a given lubrication apparatus, which increases material costs and service time.

### BRIEF DESCRIPTION OF THE INVENTION

According to one aspect of the invention, a lubrication ring is provided and includes a first annular member formed of a first material and a second annular member formed of a second material, which is different from the first material. The first and second annular members are disposed to abut one another along complementary radial surfaces thereof such that the first annular member surrounds the second annular member. The second material is a lubricant retaining material.

According to another aspect of the invention, a lubrication ring is provided and includes an annular member, including a body having opposed inward and outward radial portions and opposed forward and aft axial portions extending between the opposed inward and outward radial portions. The inward radial portion includes first radial surfaces disposed at a first radial plane, second radial surfaces disposed at a second radial plane, and third surfaces having non-zero radial components and non-zero axial components. The third surfaces are formed to extend between the first and second radial surfaces.

According to yet another aspect of the invention, a lubrication ring is provided and includes a first annular member formed of a first material, a second annular member formed of a second material, which is different from the first material and a third annular member formed of a third material, which is different from the first and second materials. Respective cross-sections of the second and third annular members are encompassed within a cross-section of the first annular member. The first annular member includes a body having opposed inward and outward radial portions and opposed forward and aft axial portions extending between the opposed inward and outward radial portions and the inward radial portion is formed to define through-holes extending from a radial surface to the third annular member.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of a lubrication ring in accordance with embodiments;
FIG. 2 is a cross-sectional view taken along line A-A of FIG. 1 of the lubrication ring in accordance with alternative embodiments;
FIG. 3 is a cross-sectional view taken along line A-A of FIG. 1 of the lubrication ring in accordance with further alternative embodiments; and
FIG. 4 is a cross-sectional view taken along line A-A of FIG. 1 of the lubrication ring in accordance with further alternative embodiments.

The detailed description explains embodiments of the invention, together with advantages and features, by way of example with reference to the drawings.

### DETAILED DESCRIPTION OF THE INVENTION

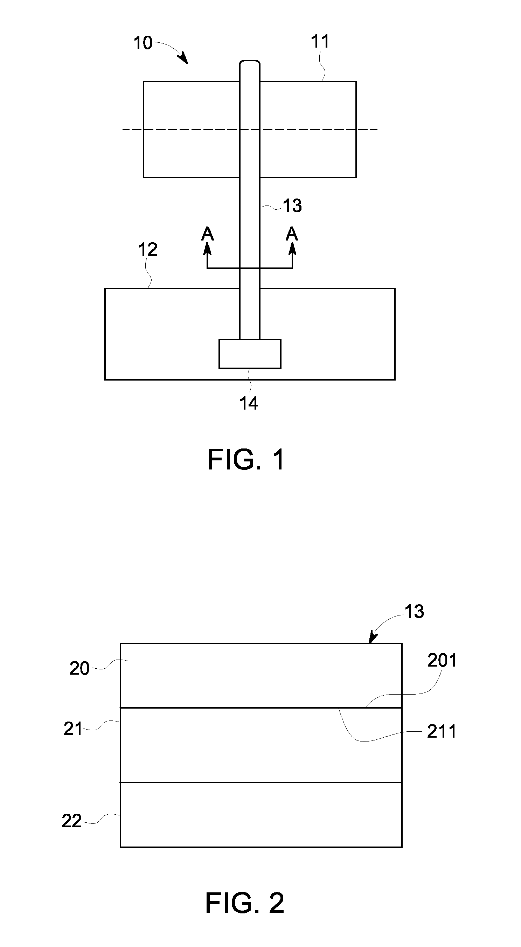

With reference to FIG. 1, a shaft lubrication apparatus 10 is provided. The shaft lubrication apparatus 10 includes a single lubrication ring 13, as will be described below, that facilitates lubrication and reduces the likelihood of a dry run.

The shaft lubrication apparatus 10 includes a rotatable shaft 11 for use with, for example, a gas turbine engine or another type ofturbomachine, a lubrication sump 12, which is configured to collect lubricant, such as oil, for the rotatable shaft 11 and the lubrication ring 13 in accordance with the embodiments described below. The lubrication ring 13 is disposed about and hangs freely from the rotatable shaft 11 whereby a "top-most" portion of the lubrication ring 13 contacts a "top" portion of the rotatable shaft 11 relative to a gravitation direction and a "bottom-most" portion of the lubrication ring 13 sits in the lubrication sump 12. The lubrication ring 13 thus rotates along with the rotation of the rotatable shaft 11, albeit at a possibly reduced rotational speed, such that the lubrication ring 13 rotates through the lubrication sump 12. In so doing, the lubrication ring 13 absorbs lubricant from the lubrication sump 12 and transports the absorbed lubricant from the lubrication sump 12 to the rotatable shaft 11. The absorbed lubricant is then deposited by the lubrication ring 13 onto the rotatable shaft 11 by gravitational forces and in accordance with a configuration of the lubrication ring 13.

The shaft lubrication apparatus 10 may further include a weight 14. The weight 14 is configured to be attachable to the lubrication ring 13 to thereby increase effects of the gravitational forces involved in the deposition of the lubricant onto the rotatable shaft 11. Such deposition is thus facilitated by the weight 14.

In accordance with alternative embodiments and, with reference to FIG. 2, the lubrication ring 13 may include a first annular member 20 and a second annular member 21. The first annular member 20 is formed of a first material and the second annular member 21 is formed of a second material, which is different from the first material. The second material may include one or more of a netted, lubricant absorbent material and felt. Generally, the second material of the second annular member 21 may be a lubricant retaining material. The first and second annular members 20 and 21 are disposed to abut one another along complementary radial surfaces 201 and 211, respectively, such that the first annular member 20 surrounds the second annular member 21. The first and second annular members 20 and 21 may be affixed to one another by one or more of a fastening element, an adhesive or a material bond.

The lubrication ring 13 may further include a third annular member 22, which is formed of the first material or a third material that is different from the second material of the second annular member 21. Where the lubrication ring 13 includes the third annular member 22, the second annular member 21 is sandwiched between the first and third annular members 20 and 22.

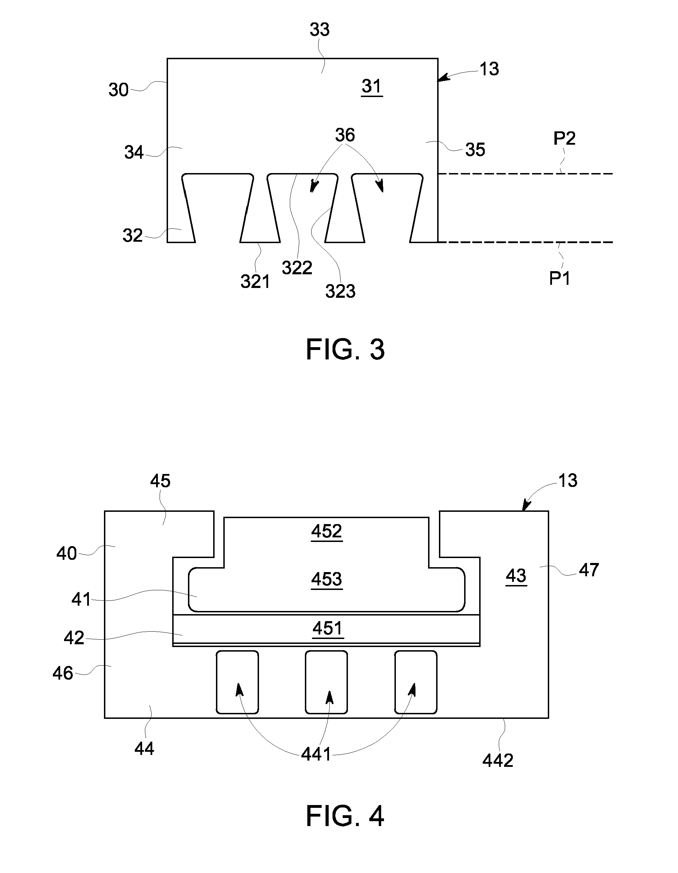

In accordance with further alternative embodiments and, with reference to FIG. 3, the lubrication ring 13 may include an annular member 30 made of injection molded plastic, such as Delrin™. The annular member 30 include a body 31 having opposed inward and outward radial portions 32 and 33 and opposed forward and aft axial portions 34 and 35 extending between the opposed inward and outward radial portions 32 and 33. The inward radial portion 32 includes first radial surfaces 321 disposed at a first radial plane P1, second radial surfaces 322 disposed at a second radial plane P2 and third surfaces 323. The third surfaces have non-zero radial components and non-zero axial components and are thus obliquely angled with respect to the first and second radial surfaces 321 and 322.

The third surfaces 323 are formed to extend between the first and second radial surfaces 321 and 322 such that the second radial surfaces 322 and the third surfaces 323 delimit one or more recesses 36. The one or more recesses 36 are defined to extend radially outwardly from the first radial plane P1 and into the body 31 of the annular member 30. The one or more recesses 36 may be substantially polygonal and, in some cases, substantially trapezoidal. In the case of the second radial surfaces 322 and the third surfaces 323 delimiting more than one recess 36, the recesses 36 may all have similar shapes while some may have unique shapes.

In accordance with further alternative embodiments and, with reference to FIG. 4, the lubrication ring 13 may include a first annular member 40, a second annular member 41 and a third annular member 42. The first annular member 40 may be formed of a first material, the second annular member 41 may be formed of a second material, which is different from the first material, and the third annular member 42 may be formed of a third material, which is different from the first and second materials. At least the second and third materials may include a lubricant retaining material. The lubricant retaining material may be a netted, lubricant absorbent material and felt.

As shown in FIG. 4, respective cross-sections of the second and third annular members 41 and 42 are encompassed within a cross-section of the first annular member 40. The first annular member 40 includes a body 43 having opposed inward and outward radial portions 44 and 45 and opposed forward and aft axial portions 46 and 47 that extend between the opposed inward and outward radial portions 44 and 45. The inward radial portion 44 is formed to define through-holes 441 extending substantially radially outwardly from a radial surface 442 of the inward radial portion 44 to the third annular member 42. Thus, the third annular member 42 may be exposed radially inwardly (e.g., to the rotatable shaft 11 of FIG. 1) via the through-holes 441. The respective cross-sections of the second and third annular members 41 and 42 are encompassed within a cross-section of the outward radial portion 45 of the first annular member 40.

The cross-section of the outward radial portion 45 of the first annular member 40 includes a central void 451, an exterior void 452 and an intermediate void 453. The intermediate void 453 is wider than both the central void and the exterior void 452. The third annular member 42 may be disposed in the central void 451 while the second annular member 41 may be disposed in the exterior and intermediate voids 452 and 453. The portion of the second annular member 41 disposed in the intermediate void 453 is wider than at least the exterior void 452 whereby the second and third annular members 41 and 42 may be secured in the first annular member 40.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A lubrication ring, comprising:
   a first annular member formed of a first material; and
   a second annular member formed of a second material, which is different from the first material,
   the first and second annular members being disposed to abut one another along complementary radial surfaces thereof such that the first annular member surrounds the second annular member, and
   the second material being a lubricant retaining material.
2. The lubrication ring according to clause 1, wherein the second material comprises one or more of a netted, lubricant absorbent material and felt.
3. The lubrication ring according to clause 1 or clause 2, further comprising a third annular member, wherein the second annular member is sandwiched between the first and third annular members.
4. The lubrication ring according to any preceding clause, further comprising a weight, which is attachable to one or more of the first and second annular members.
5. A shaft lubrication apparatus, comprising a rotatable shaft, a lubrication sump and the lubrication ring according to any preceding clause, the lubrication ring being rotatable with the rotatable shaft with respect to the lubrication sump whereby at least one of the first and second annular members transports lubrication from the lubrication sump to the rotatable shaft.
6. A lubrication ring, comprising:
   an annular member, including a body having opposed inward and outward radial portions and opposed forward and aft axial portions extending between the opposed inward and outward radial portions,
   the inward radial portion including first radial surfaces disposed at a first radial plane, second radial surfaces disposed at a second radial plane and third surfaces having non-zero radial components and non-zero axial components, and
   the third surfaces being formed to extend between the first and second radial surfaces.
7. The lubrication ring according to any preceding clause, wherein the second radial surfaces and the third surfaces delimit a recess from the first radial plane in the body of the annular member.
8. The lubrication ring according to any preceding clause, wherein the recess is substantially polygonal.
9. The lubrication ring according to any preceding clause, wherein the recess is substantially trapezoidal.
10. The lubrication ring according to any preceding clause, wherein the second radial surfaces and the third surfaces delimit one or more recesses from the first radial plane in the body of the annular member.
11. The lubrication ring according to any preceding clause, wherein the annular member comprises injection molded plastic.
12. The lubrication ring according to, further comprising a weight, which is attachable to the annular member.
13. A shaft lubrication apparatus, comprising a rotatable shaft, a lubrication sump and the lubrication ring according to any preceding clause, the lubrication ring being rotatable with the rotatable shaft with respect to the lubrication sump whereby the annular member transports lubrication from the lubrication sump to the rotatable shaft.
14. A lubrication ring, comprising:
   a first annular member formed of a first material;
   a second annular member formed of a second material, which is different from the first material; and
   a third annular member formed of a third material, which may be different from the first and second materials,
   respective cross-sections of the second and third annular members being encompassed within a cross-section of the first annular member,
   the first annular member including a body having opposed inward and outward radial portions and opposed forward and aft axial portions extending between the opposed inward and outward radial portions, and
   the inward radial portion being formed to define through-holes extending from a radial surface to the third annular member.
15. The lubrication ring according to any preceding clause, wherein the second and third annular members are disposed in the outward radial portion of the first annular member.
16. The lubrication ring according to any preceding clause, wherein at least one of the second and third materials comprises a lubricant retaining material.
17. The lubrication ring according to any preceding clause, wherein at least one of the second and third materials comprises one or more of a netted, lubricant absorbent material and felt.
18. The lubrication ring according to any preceding clause, further comprising a weight, which is attachable to one or more of the first, second and third annular members.
19. A shaft lubrication apparatus, comprising a rotatable shaft, a lubrication sump and the lubrication ring according to any preceding clause, the lubrication ring being rotatable with the rotatable shaft with respect to the lubrication sump whereby at least one of the first, second and third annular members transports lubrication from the lubrication sump to the rotatable shaft.

## Claims

1. A lubrication ring (13), comprising:
a first annular member (20) formed of a first material; and
a second annular member (21) formed of a second material, which is different from the first material,
the first and second annular members (20,21) being disposed to abut one another along complementary radial surfaces thereof such that the first annular member (20) surrounds the second annular member (21), and
the second material being a lubricant retaining material.

2. The lubrication ring according to claim 1, wherein the second material comprises one or more of a netted, lubricant absorbent material and felt.

3. The lubrication ring according to claim 1 or claim 2, further comprising a third annular member, wherein the second annular member is sandwiched between the first and third annular members.

4. The lubrication ring according to any preceding claim, further comprising a weight, which is attachable to one or more of the first and second annular members.

5. A shaft lubrication apparatus, comprising a rotatable shaft, a lubrication sump and the lubrication ring according to any preceding claim, the lubrication ring being rotatable with the rotatable shaft with respect to the lubrication sump whereby at least one of the first and second annular members transports lubrication from the lubrication sump to the rotatable shaft.

6. A lubrication ring, comprising:
an annular member, including a body having opposed inward and outward radial portions and opposed forward and aft axial portions extending between the opposed inward and outward radial portions,
the inward radial portion including first radial surfaces disposed at a first radial plane, second radial surfaces disposed at a second radial plane and third surfaces having non-zero radial components and non-zero axial components, and
the third surfaces being formed to extend between the first and second radial surfaces.

7. The lubrication ring according to claim 6, wherein the second radial surfaces and the third surfaces delimit a recess from the first radial plane in the body of the annular member.

8. The lubrication ring according to claim 6 or claim 7, wherein the recess is substantially polygonal.

9. The lubrication ring according to any of claims 6 to 8, wherein the recess is substantially trapezoidal.

10. The lubrication ring according to any of claims 6 to 9, wherein the second radial surfaces and the third surfaces delimit one or more recesses from the first radial plane in the body of the annular member.

11. The lubrication ring according to any of claims 6 to 10, wherein the annular member comprises injection molded plastic.

12. The lubrication ring according to any of claims 6 to 11, further comprising a weight, which is attachable to the annular member.

13. A shaft lubrication apparatus, comprising a rotatable shaft, a lubrication sump and the lubrication ring according to any of claims 6 to 12, the lubrication ring being rotatable with the rotatable shaft with respect to the lubrication sump whereby the annular member transports lubrication from the lubrication sump to the rotatable shaft.

14. A lubrication ring, comprising:
a first annular member formed of a first material;
a second annular member formed of a second material, which is different from the first material; and
a third annular member formed of a third material, which may be different from the first and second materials,
respective cross-sections of the second and third annular members being encompassed within a cross-section of the first annular member,
the first annular member including a body having opposed inward and outward radial portions and opposed forward and aft axial portions extending between the opposed inward and outward radial portions, and
the inward radial portion being formed to define through-holes extending from a radial surface to the third annular member.

15. The lubrication ring according to claim 14, wherein the second and third annular members are disposed in the outward radial portion of the first annular member.
